(19) Europäisches Patentamt
European Patent Office
Office européen des brevets

(11) **EP 2 328 708 B1**

(12) **EUROPÄISCHE PATENTSCHRIFT**

(45) Veröffentlichungstag und Bekanntmachung des Hinweises auf die Patenterteilung:
**11.10.2017  Patentblatt 2017/41**

(21) Anmeldenummer: **09778126.4**

(22) Anmeldetag: **26.08.2009**

(51) Int Cl.:
**B23K 9/028** *(2006.01)*     **B23K 9/235** *(2006.01)*

(86) Internationale Anmeldenummer:
**PCT/EP2009/006185**

(87) Internationale Veröffentlichungsnummer:
**WO 2010/022931 (04.03.2010 Gazette 2010/09)**

(54) **VERFAHREN ZUM VERBINDUNGSSCHMELZSCHWEISSEN VON DÜNNWANDIGEN UMMANTELUNGEN**

METHOD FOR FUSION WELDING THIN WALLED CASING

PROCÉDÉ DE SOUDAGE PAR FUSION D'UNE ENCEINTE À PAROI MINCE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **27.08.2008  RU 2008134622**
**27.08.2008  RU 2008134621**

(43) Veröffentlichungstag der Anmeldung:
**08.06.2011  Patentblatt 2011/23**

(73) Patentinhaber: **ARMOTECH s.r.o.**
**140 000 Praha 4 (CZ)**

(72) Erfinder:
• **LUKIYANETS, Sergey, V.**
**Prag 5-Zlicin (CZ)**
• **MOROZ, Nikolay, G.**
**Mizosov (CZ)**

(74) Vertreter: **Kratochvil, Vaclav**
**Patent and Trademark Office**
**P.O. Box 26**
**295 01 Mnichovo Hradiste (CZ)**

(56) Entgegenhaltungen:
**DE-A1-102005 002 618     DE-B3-102005 035 585**
**US-A- 3 179 781**

**Beschreibung**

Gebiet der Technik

Die Erfindung betrifft ein Schweißverfahren insbesondere im Bereich der Technik des Verbindungsschmelzschweißens in einem Medium aus Schutzgasen mit Zugabe von Reagenzien von Halogenen in die Schweißzone, und kann beim Schweißen insbesondere von dünnwandigen Ummantelungen, Rohr-Rohlingen und Ähnlichem aus nicht rostenden Stählen verwendet werden. Die Gattung ist der DE-A-102005002618 zu entnehmen.

Stand der Technik

Um ein Schweißen besonders dünnwandiger zylindrischer Produkte mit großen Umfangslängen durchzuführen, muss eine vollständige Übereinstimmung der Verbindungsränder der Produkte sowohl bezüglich der Dicke als auch bezüglich des Umfangs unter Berücksichtigung der Koaxialität und der Genauigkeit der Zentrierung der zu schweißenden Teile ermöglicht werden.
Beim Schweißen von besonders dünnwandigen Produkten ist es außerdem ohne spezielle Vorbereitung der Teile aufgrund der Kommensurabilität der Rauhigkeitsparameter und Parameter der Dickendifferenz der Verbindungs-Stirnseiten mit ihrer Dicke nicht möglich, ein qualitativ hochwertiges Schmelzschweißen von Verbindungs-Stirnseiten durchzuführen. Das ist dadurch bedingt, dass beim Verbindungs-Schmelzschweißen infolge des zufälligen Charakters der Bildung der Kontaktstellen an den Verbindungs-Stirnseiten unter der Einwirkung des an den Kontaktstellen fließenden Schweißstroms ein rasches Überhitzen des Metalls der Kontaktstellen und dessen Auswurf aus der Schweißzone erfolgt. Außerdem gelingt es angesichts der spezifischen Besonderheiten der Erhitzung des Metalls bei ununterbrochenem Schmelzen nicht, eine ausreichend breite Erhitzungszone zu erzielen, die für ein Qualitätsschweißen von Werkstücken mit großem Querschnitt erforderlich ist. Es ist bekannt, dass die Qualität der Vorbereitung der Oberflächenschicht (Rauheit, Welligkeit, Abnutzungsbeständigkeit, Mikrohärte, Restspannungen) der Teile sich auf die Qualität ihrer Schweißbarkeit auswirkt.
Es ist ebenfalls bekannt, dass bei der Durchführung des Schweißens besonders dünnwandiger Werkstücke mit großen Umfangslängen eine ungleichmäßige Änderung der Umfänge der zu schweißenden Rohlinge aufgrund der Wärmespannungen erfolgt, die in dem Material der zu schweißenden Rohlinge bei der Durchführung des Schweißvorgangs entstehen. Diese Änderungen der Länge der Umfänge führen im besten Fall zu einem Verzug der zu schweißenden Rohlinge oder zu einem Durchbrennen der zu schweißenden Rohlinge. Für eine qualitativ hochwertige Durchführung des Verfahrens des Schweißens dünnwandiger Ummantelungen ist es nötig, eine völlige Kongruenz der Verbindungsränder der Werkstücke sowohl bezüglich der Dicke als auch bezüglich des Umfangs unter Berücksichtigung der Koaxialität und der Genauigkeit der Zentrierung der zu schweißenden Teile herzustellen und diesen Zustand beim eigentlichen Schweißvorgang aufrechtzuerhalten.
Aus der SU 1185781 A1 ist ein Verfahren zum Vorbereiten und Montieren von ringförmigen Verbindungen zum Schweißen bekannt, im Wesentlichen von biegsamen Konstruktionen, einschließlich der mechanischen Bearbeitung von Rändern bis zu einer vorher bestimmten Größe und deren Montage an einem zentrierenden Expansionsring, wobei zunächst jeder der zu schweißenden Teile an dem zentrierenden Ring angeordnet wird, der Ring expandiert wird, die Schweißränder elastisch verformt werden und deren mechanische Bearbeitung durchgeführt wird und anschließend die Montage der Verbindungen erfolgt, wofür die Ringe entlang der axial zu verbindenden Oberflächen übereinander gelegt werden.
Der Nachteil dieser Lösung ist, dass bei der Ausführung der mechanischen Bearbeitung im Fall von dünnwandigen Teilen Stirnseiten mit einer Rauhigkeit entstehen, die kommensurabel zu der Dicke der Wand der Teile ist, was deren qualitativ hochwertiges Schweißen unmöglich macht.
Aus der RU 2 288 827 C1 ist ein Verfahren zur Vorbereitung der Ränder von Rohren für das Schweißen bekannt, bei dem eine Drehbearbeitung und eine kalte Verformung der Stirnseite des Rohrs erfolgt, wobei an dessen oberem Rand ein aufgesetzter Vorsprung gebildet wird und wobei die Stirnseite eines der zu schweißenden Rohre dem Schneidwerkzeug in einem Winkel von 90° zur Achse des Rohres zugewandt ist und die Stirnseite des zweiten Rohrs von innen mit 90° bearbeitet wird, wobei im oberen Teil der Stirnseite ein ringförmiger Vorsprung mit einer Dicke und Länge von nicht mehr als 4 mm zurückbleibt, wobei anschließend dieser ringförmige Vorsprung mit einer Reibrolle in einem Winkel von 45 bis 90° bezüglich der Achse des Rohrs nach außen gebogen wird und der erzielte zurückgebogene Vorsprung angedreht wird, wobei sein Querschnitt die Form des aufgesetzten Vorsprungs, nämlich eines gleichschenkligen Dreiecks oder gleichschenkligen Trapezes oder eines Rechtecks bekommt, woraufhin in der Stirnseite unter dem aufgesetzten Vorsprung eine zylindrische Ebene mit einem Innendurchmesser, der gleich dem Außendurchmesser des Stirnseite des ersten Rohrs ist, angedreht wird.
Der Nachteil dieser Lösung besteht darin, dass sie kein qualitativ hochwertiges Schweißen ermöglicht.
Der nächstgelegene Stand der Technik zu der vorgeschlagenen Erfindung ist die Lösung gemäß der RU 95118844 A. Hier wird ein Verfahren vorgeschlagen, das darin besteht, dass der Rohling in einer Matrix auf einer Stütze angeordnet wird und von der Seite der Stirnseite durch ein Drehinstrument Stauchkräfte auf den Rohling aufgebracht werden, wobei bei dem Formungsvorgang eine Umverteilung der Bestandteile der Phasenzusammensetzung des Metalls des Rohlings bis zur kristallografischen Stufe bei phänomenologischer Zusammenstellung der physikalischen Charakteristika ermöglicht wird.

Die Nachteile dieser Lösung bestehen darin, dass bei Einwirkung von hohen Kontaktdrücken eine Kompression in einer vorher bestimmten Richtung und eine Umverteilung des Materials erfolgt, das nicht aus der Bearbeitungszone entfernt wird, was eine hohe Qualität der Vorbereitung der zu schweißenden dünnwandigen Ummantelungsrohlinge verhindert.

Offenbarung der Erfindung

Aufgabe der Erfindung ist die Schaffung eines Verfahrens zum qualitativ hochwertigen Schweißen der Ringverbindungen von dünnwandigen zylindrischen Ummantelungen zur Herstellung von geschlossenen Behältern.

Diese Aufgabe wird durch ein Verfahren mit den Merkmalen des Patentansprcuhs 1 gelöst. Vorteilhafte Weiterbildungen des erfindungsgemäßen Verfahrens sind Gegenstand der Patentansprüche 2 bis 14

Mit dem erfindungsgemäßen Verfahren ist es möglich, die Qualität einer Schweißnaht bei dünnwandigen Ummantelungsrohlingen durch Schaffung einer dichten, feinkörnigen Struktur ohne Mikrodefekte zu erhöhen, was die Qualität der Schweißnaht verbessert.

Bei einer bevorzugten Ausführungsart des erfindungsgemäßen Verfahrens zum Verbindungs-Schmelzschweißen von dünnwandigen, im Wesentlichen biegsamen zylindrischen Ummantelungen werden die zu verbindenden Stirnseiten vorbereitet, eine Stoß-Anordnung an zentrierenden Vorrichtungen durchgeführt und ein gemeinsame Schmelzen unter vorläufiger Beibehaltung eines zum Durchführen des Schweißens ausreichenden Anordnungsspalts zwischen den aneinander anliegenden Oberflächen durchgeführt, wobei an jeder der zu verbindenden Ummantelungen durch plastische Verformung eine Verformung der Mikrovorsprünge an der zu schweißenden Oberfläche der Stirnseite stattfindet, wobei ein Stauchen in der Größe $\Delta h = a \delta + b \delta^2/R$ mit Rollen mit einem Rauhigkeitsparameter Ra $\leq$ 0,16 $\mu$m stattfindet,

wobei $\delta$ die Dicke der Wand der zu schweißenden Ummantelung in mm ist;

R der Radius der zu schweißenden Ummantelung in mm ist;

a, b die konstanten Koeffizienten für den Bereich $\delta/R$ von 0,003 bis 0,01 sind, die entsprechend die Werte bilden, die für a zwischen 0,1 und 0,3 und für b zwischen 0,075 und 0,375 liegen;

wobei das verformte Metall von der Stirnseite des hohlen zylindrischen Rohlings zu der Seite seiner inneren Oberfläche bewegt wird und darauf ein inneres ringförmiges Wulstband mit einer Breite von 0,5 $\delta$ bis 1,5 $\delta$ und einer Dicke von 0,2 $\delta$ bis 0,5 $\delta$ ausgebildet wird, die zu verbindenden Ummantelungen in der bezüglich des Außendurchmessers zentrierenden Vorrichtung angeordnet werden, und zunächst am Umfang in der Ebene der Verbindung ihre Punktverschweißung stattfindet, wobei die Elektrode schrittweise um einen Schritt von 20 $\delta$ bis 50 $\delta$ bewegt wird, wobei das eigentliche kontinuierliche Hauptschweißen unter Ausbildung einer Schmelzzone erfolgt, deren Breite zwischen 4 $\delta$ und 6 $\delta$ liegt, wobei die Wärmeabfuhr aus den zu schweißenden Teilen auf einem Abstand begonnen wird, der nicht mehr als 6 bis 8 $\delta$ von der Verbindungsebene beträgt.

Die Verformung der Mikrovorsprünge an der Stirnseite und deren Stauchen wird unter Begrenzung der radialen Verformungen der seitlichen äußeren Oberfläche, die an der Stirnseite anliegt, ausgeführt.

Die Verformung der Mikrovorsprünge an der Stirnseite und deren Stauchen wird unter gleichzeitigem Glätten mit Rollen der an der Stirnseite anliegenden äußeren seitlichen Oberfläche ausgeführt.

Die Verformung der Mikrovorsprünge an der zu schweißenden Oberfläche der Stirnseite wird mit Rollen mit einem Durchmesser, der gleich (4-6) $\delta$ ist, und mit einem Härteparameter des Materials HRc > 65 ausgeführt.

Die Verformung der Mikrovorsprünge an der zu schweißenden Oberfläche der Stirnseite wird mit einer auf die Rolle aufgebrachten Kontaktkraft von 200-300 N ausgeführt.

Das Punktschweißen wird in zwei Umdrehungen durchgeführt, wobei die zweite Umdrehung um eine halbe Schrittlänge von der ersten Schweißung versetzt ist.

Die dünnwandigen ringförmigen Bänder an den inneren Oberflächen der zu schweißenden Ummantelungen werden mit dem gleichen Innendurchmesser für jeden der zu schweißenden Ummantelungsrohlinge ausgebildet.

Die dünnwandigen ringförmigen Bänder an den inneren Oberflächen der zu schweißenden Ummantelungen werden in einem nicht rechten Winkel im Inneren jedes der zu schweißenden Ummantelungsrohlinge ausgebildet.

An dem Erhitzungspunkt des Materials an der äußeren und der inneren Oberfläche der zu schweißenden Ummantelungen werden in ihrer Zusammensetzung unterschiedliche Schutzgasmedien zugeführt.

Nach der plastischen Verformung vor dem Schweißen werden die Stirnseitenoberflächen der Rohlinge mit einem Lösungsmittel gereinigt.

Der Vorteil der Erfindung liegt in der Einfachheit und Zuverlässigkeit ihrer Ausführung.

Kurze Beschreibung der Zeichnungen der Erfindung

Fig. 1 und 2      zeigen schematisch ein Verfahren zur plastischen Verformung.

Fig. 3      zeigt schematisch die Rauhigkeit der Oberfläche eines Werkstücks.

Fig. 4      zeigt vereinfacht schematisch ein Spannungsfeld.

Fig. 5      zeigt schematisch einen an einer Stirnkante entstandenen Wulst.

Fig. 6      zeigt schematisch eine Ansicht von der Stirnseite auf eine Vorrichtung, die zur Bildung des Wulstes verwendet wird.

Fig. 7      zeigt den Teilschnitt A-A von Fig. 6.

Fig. 8      zeigt schematisch die Bildung von Spannungen beim Verbindungsschweißen von Lamellen in einem Durchgang.

Fig. 9      zeigt die Bildung der Querschrumpfung beim Verbindungsschweißen in einem Durchgang.

Fig. 10 und 11      zeigen Verformungen in der Ebene beim Schweißen von langen und dünnen Lamellen.

Ausführungsformen der Erfindung

In der Regel weisen besonders dünnwandige Ummantelungen und Rohr-Rohlinge, die aus blattartigen Halbzeugen durch Verformung beim Herstellungsverfahren gefertigt werden, Abweichungen bei den linearen Abmessungen von Durchmesser, Dicke, Bearbeitungsgüte der Stirnseiten usw. auf.

Es ist bekannt, dass die Mikrogeometrie einer bearbeiteten Oberfläche von einer großen Zahl verschiedener Faktoren abhängt, wie z.B. Art des Schneidens, Fehlerhaftigkeit der Form, Vibrationen im technischen System usw. Daher wird sie als Verwirklichung eines zufälligen Felds von Mikrorauhigkeiten betrachtet und durch Kennwerte wie Rz, Rc und Ra bestimmt.

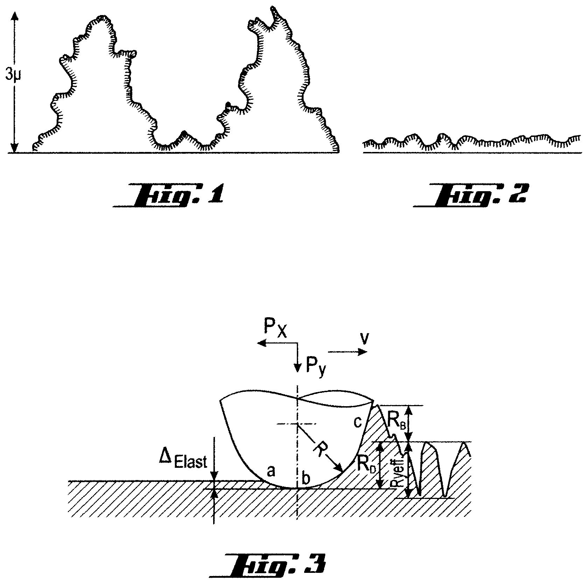

An Teilen mit Unregelmäßigkeiten der Oberfläche findet eine Adsorption verschiedener Gase statt, die außer zu den oben genannten Auswirkungen zu beträchtlichen Problemen beim Schweißen dünner Teile führt. Die Menge der adsorbierten Gase bei Metallen und Legierungen hängt stark von dem Grad der Rauhigkeit ihrer Oberfläche ab. So ist bei der Mehrheit der Ultrahochvakuumkammern analytischer und technologischer Anlagen, die von vielen bekannten Firmen hergestellt werden, die innere Oberfläche üblicherweise bis zu einer Rauhigkeitsstufe Ra 1 bis 3 $\mu$m bearbeitet. Eine solche Oberfläche sieht im Querschnitt ungefähr so aus, wie in Fig. 1 gezeigt.

Wenn es gelingt, diese Oberfläche bis zu einer Rauhigkeitsstufe Ra 0,1 bis 0,3 $\mu$m zu polieren, verringert sich ihre reale Fläche um mehr als einen Faktor 10. Die Gesamtzahl der Defekte in der Struktur wird wesentlich geringer, und diese Oberfläche sieht ungefähr so aus, wie in Fig. 2 gezeigt.

Das Erzielen einer hohen Bearbeitungsgüte ist möglich durch Bearbeitung der vorzubereitenden Oberfläche durch Methoden der plastischen Verformung, beispielsweise durch Glättrollen mit einem Güteparameter der Arbeitsoberfläche von Ra $\leq$ 0,16 $\mu$m und einem Härteparameter des Materials HRc > 65.

In Fig. 3 ist die Verformung der Oberflächenschicht bei Bewegung des Instruments in der Glättungsrichtungsebene gezeigt. Das Instrument, das mit einer Kraft $P_y$ an die zu bearbeitende Oberfläche gedrückt wird, wird in eine Tiefe $R_D$ eingeführt, und bei seiner Bewegung glättet es die ursprünglichen Rauhigkeiten. Nach dem Durchgang des Instruments erfolgt ein teilweiser elastischer Rücksprung der Oberfläche auf eine Höhe $\Delta_{Elast.}$

Als Ergebnis der plastischen Verformung der zu bearbeitenden Oberfläche erfolgt eine Glättung der ursprünglichen Rauhigkeiten und die Bildung eines neuen Mikroreliefs der Oberfläche auf eine wesentlich geringere Höhe der Unregelmäßigkeiten $R_z$. Die Größe des Werkstücks verringert sich um den Wert der Restverformung $\Delta_{PB}$.

Die Besonderheit des Verfahrens der plastischen Verformung liegt darin, dass vor dem Glätter eine Walze aus plastisch verformtem Material $R_B$ ausgebildet ist, die infolge vielfacher Einwirkung quasi verstrichen wird.

Die Besonderheit der vorgeschlagenen erfindungsgemäßen Lösung liegt darin, dass in diesem Fall beim Glätten die verformte Walze des Materials nicht verstrichen oder entfernt wird, sondern einer ausreichenden elastisch-plastischen Verformung in einer Richtung senkrecht zu der Bewegung des Instruments unterzogen wird. D.h. bei dieser Lösung wird vorgeschlagen, die vor dem Glätter entstehende Walze aus Material in einer Richtung wegzubewegen, die senkrecht zu der Richtung des Glätters ist.

Die optimale Kraft der verformenden Glättung ist $P_y$ = 200 - 300 N. Bei $P_y$ = 300 N steigt die Tiefe der verstärkten Schicht, die Mikrohärte in den unteren Schichten wird erhöht, obgleich die Mikrohärte in der obersten dünnen Oberflächenschicht aufgrund der Verringerung der Plastizität sinkt.

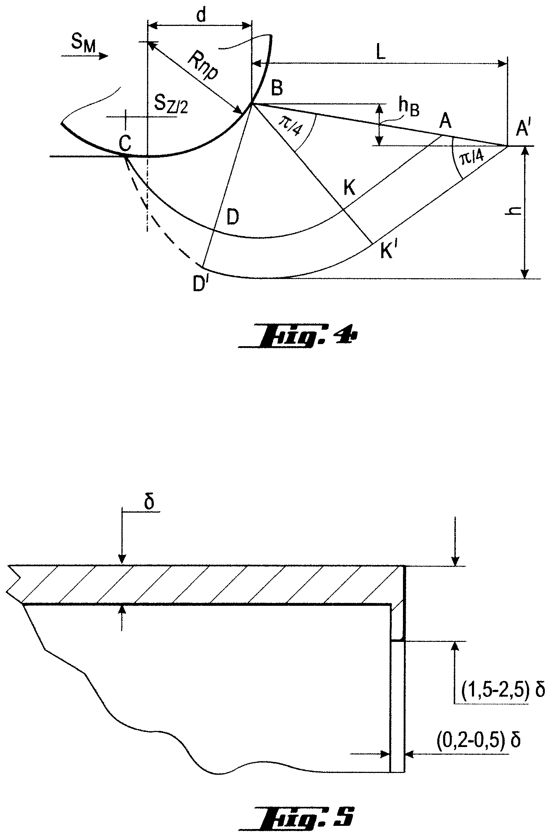

In Fig. 4 ist vereinfacht schematisch ein Spannungsfeld gezeigt, das bei der plastischen Verformung mit der Rolle entsteht.

Der Punkt A' bezeichnet die Länge L der vordersten Welle BA' außerhalb der Kontaktoberfläche. A'K'D'C ist die Grenze des Bereichs der entwickelten plastischen Verformungen, deren unterster Punkt die Dicke der Verstärkungsschicht h bezeichnet. Die Verformungsfelder, die unterhalb dieses Punkts liegen, verursachen keine nennenswerte Veränderung des Widerstands des Metalls gegenüber den plastischen Verformungen. Die Linien BK' und K'A' weisen einen Winkel von $\pi/4$ zu BA' auf. Aus den geometrischen Gründen:

$$h = \sqrt{2}/2\sqrt{(h_\delta^2 + l^2)} - h_\delta \qquad (1)$$

Bei dem am häufigsten verwendeten Verarbeitungsmodus $l \gg h_B$

$$h \approx 0{,}7\,L \qquad (2)$$

Experimentell wurde herausgefunden, dass

$$L = 2{,}1\,d^{0{,}5} \qquad (3)$$

Wird (3) in (2) eingesetzt, ergibt sich die Größe der Sackung bei einem Durchgang des Verformungsinstruments.

$$h = 1{,}5\sqrt{d} \qquad (4).$$

Wie bereits angemerkt, wird entsprechend der vorliegenden Erfindung vorgeschlagen, beim Verfahren des Glättens der Stirnseite eines Werkstücks die entstehende Welle des Materials in einer Richtung zu verschieben, die senkrecht zu der Bewegungsrichtung des Glätters ist, nämlich in der Richtung der inneren Oberfläche des zu schweißenden Teils, was zur Bildung eines ringförmigen Wulstbandes führt, das die Dicke der Wand des Teils lokal erhöht und die lokale Biegesteifigkeit der Stirnseite um ein Mehrfaches erhöht, wie in Fig. 5 gezeigt. So ist bei einer nach innen hineinragenden Höhe des Wulstes, die gleich dem 0,5- bis 1,5-fachen der Dicke der Wand ist, die lokale Biegesteifigkeit der Stirnseite um das 3.37- bis 15.625-fache erhöht.

Die Bildung des Wulstes mit solchen Parametern vereinfacht die technische Handhabung bei der Durchführung der Vorbereitungsarbeiten zum Schweißen.

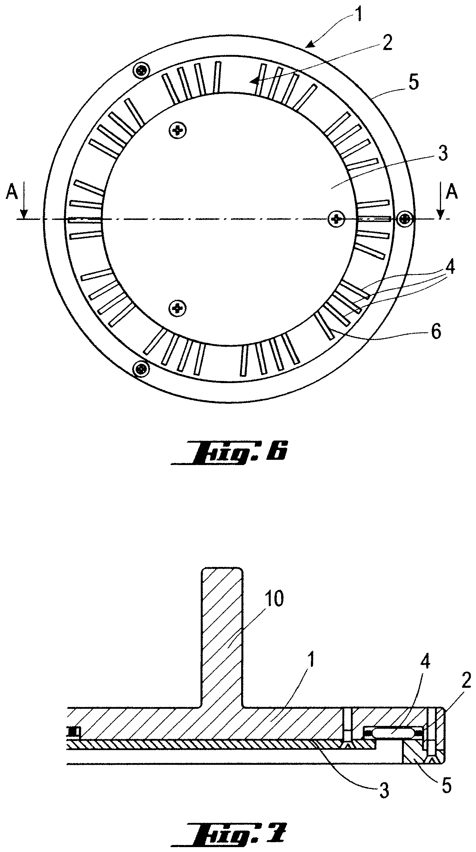

Der Aufbau der Vorrichtung zur Herstellung eines solchen Wulstes ist in Fig. 6 in einer Ansicht von der Stirnseite und in Fig. 7 als unvollständiger Schnitt A-A durch Fig. 6 gezeigt. Sie umfasst das scheibenförmige Gehäuse 1 mit der Halterung 10 an ihrer rückwärtigen Stirnseite und mit einer ringförmigen Profilschiene in Form einer konzentrischen Vertiefung an dessen Vorderseite, in der ein ringförmiger Separator 2 angeordnet ist, der radial ausgerichtete Rollen 4 und Rollen 6, die in einem spitzen Winkel zum Radius ausgerichtet sind, umfasst. Der ringförmige Separator 2 mit den Rollen 4, 6 ist in dem Gehäuse 1 mittels eines Deckels 3 im zentralen Teil des Gehäuses und mittels eines Befestigungsrings 5 am Umfangsteil des Gehäuses befestigt.

Durch die Bearbeitung der Oberflächen der Stirnseiten der zu schweißenden Teile mit den Verfahren der plastischen Verformung unter Verwendung der Rollen 4, 6 ist es möglich, eine hohe Sauberkeit der Bearbeitung zu erzielen. Durch die plastische Verformung der zu bearbeitenden Oberfläche wird eine Glättung der ursprünglich vorhandenen Unregelmäßigkeiten und die Erzeugung eines neuen Mikroreliefs der Oberfläche mit einer wesentlich geringeren Höhe der Unregelmäßigkeiten $R_z$ bewirkt.

Die Ausbildung einer Oberflächenschicht bei dem Verformungsglätten erfolgt infolge der plastischen Verformung der zu bearbeitenden Oberfläche. Unter Einwirkung einer radialen Kraft, die auf die Kontaktfläche des Verformungsinstruments mit dem Teil wirkt, entstehen Kontaktdrücke. Wenn ihre Größe die Fließgrenze des zu verformenden Teils überschreitet, entsteht eine plastische Verformung ihrer dünnen oberflächennahen Schichten. Bei der plastischen Verformung hat die Oberflächenschicht einen spezifischen faserartigen Aufbau (Textur) mit einem kristallinen Netz, das bezüglich des ursprünglichen kristallinen Netzes verzerrt ist.

Die Vorrichtung nach Fig. 6 bzw. Fig. 7 funktioniert wie folgt. Mittels der Halterung 10 wird die Vorrichtung in der Werkbank angeordnet, die eine Drehbewegung um die Achse des ringförmigen Separators 2 gemäß dem Pfeil im Uhrzeigersinn für die Vorrichtung von Fig. 6 ermöglicht. Die zu bearbeitende dünnwandige metallische Ummantelung wird mit ihrer Stirnseite (nicht gezeigt) den Verformungsrollen 4, 6 der Vorrichtung zugeführt und mit einer vorher bestimmten Kraft an diese angedrückt. Bei der Drehung der Vorrichtung bezüglich ihrer Achse verformen die radial ausgerichteten Rollen 4 die Stirnseite der Ummantelung plastisch, und die Rollen 6, die in einem spitzen Winkel zu dem Radius des Separators 2 ausgerichtet sind, z.B. zwischen 35° und 50°, bewegen das bei der plastischen Verformung entstandene Material zu der Seite der inneren Oberfläche der zu bearbeitenden Ummantelung und bilden darauf einen Wulst, der zu dem Inneren des vorzubereitenden Rands der Ummantelung gebogen ist. In Abhängigkeit von der Zahl der Umdrehungen werden die erforderlichen Abmessungen des entstehenden Wulstes gebildet. Dabei entspricht die Sauberkeit der Oberfläche der zu bearbeitenden Stirnseite der Ummantelung der Sauberkeit der Oberfläche der Verformungsrollen. Aus praktischen Gründen kann die erforderliche Kraft auf der Rolle 100 bis 200 oder sogar bis 300 N betragen. Daher, und ausgehend von der Anforderung für die Erzielung von plastischen Verformungen in dem Material der zu bearbeitenden Ummantelung, werden Nadelrollen mit einem Durchmesser gewählt, der das 5-fache der Dicke der Stirnseite des Ummantelungsrohlings nicht übersteigt, und die Härte ihres Materials muss HRc > 65 und der Rauhigkeitsparameter der Oberfläche Ra ≤ 0,16 μm betragen. Es ist zweckmäßig, die radial ausgerichteten Rollen und die in einem Winkel zu dem Radius angeordneten Rollen in getrennten, entlang des Umfangs des ringförmigen Separators 2 angeordneten Sektoren zu gruppieren, die die gesamte Stirnseite der zu bearbeitenden Ummantelung symmetrisch umschließen. Dabei ist jeder Sektor so ausgebildet, dass er 5 bis 12 % der Oberfläche der zu verformenden Stirnseite des Rohlings umschließen kann.

Unter Berücksichtigung der Größe des Stauchens der in Fig. 4 gezeigten Stirnseite h, die bei einem Durchgang des Verformungsinstruments entsteht, und ausgehend von der Gleichheit des verschobenen Volumens des Materials und des Volumens des Materials in dem zu bildenden Wulst kann die volle Größe der Schrumpfung der Stirnseite $\Delta$ h mit einer Gleichung

$$\Delta h = a\,\delta + b\,\delta^2/R$$

bestimmt werden, wobei R der Radius der neutralen Schicht des Rohlings in mm ist, a, b die konstanten Koeffizienten für den Bereich $\delta/R$ = von 0,003 bis 0,01 entsprechend gleich für a 0,1 bis 0,3 und für b 0,075 bis 0,375 sind; $\delta$ die Dicke des ursprünglichen Metallrohlings in mm ist.

Es ist bekannt, dass beim Schweißen von Ummantelungen oder Lamellen ein zweiachsiger gespannter Zustand des Metalls in der Schweißzone entsteht.

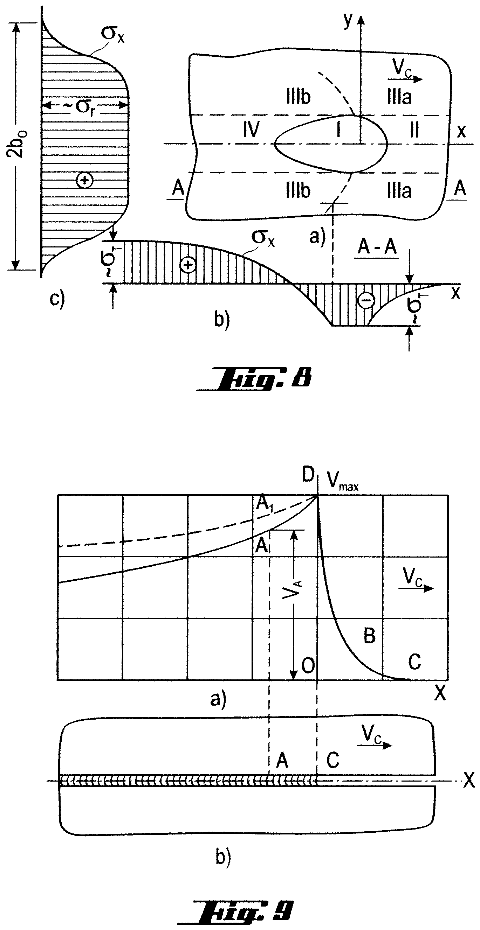

Ein typisches Bild der Verteilung der Spannungen in dem Metall bei einer Bewegung der heißen Wärmequelle ist in Fig. 8 dargestellt.

Der Bereich der Zone II, der an der Zone I anliegt, zeichnet sich durch das Vorhandensein von beträchtlichen Querrichtungs-Kontraktionsspannungen σy aus. Hier kommt es zur plastischen Verformung des Metalls. In der Zone III a, die bei der Bewegung der Wärmequelle einer Erhitzung unterzogen wird, steigen die Kontraktionsspannungen σx und σy, wobei in der Nähe der Zone I die Spannungen σy unbedeutend sind. Der Anstieg der Kontraktionsspannungen σx im Verlauf der plastischen Verkürzungsverformungen ändert sich an der Grenze der Zonen III a und III b durch ein Absinken der Kontraktionsspannungen, und anschließend auch durch deren Übergang in Expansionsspannungen in dem Maß, wie das Metall abkühlt. An der Grenze der Zonen I und IV sind die Spannungen nahe null, während in der Zone IV σx und σy expansiv sind. In dem Maß, in dem sich die Quelle in der Zone der Breite 2b entfernt, wo die plastischen Verformungen stattgefunden haben, entstehen expansive Restspannungen σx. In dem Metall sind jenseits der Grenzen der Zone der plastischen Verformungen 2b bei großer Breite der Lamelle die Spannungen nahe null.

Die Ergebnisse der Bestimmung der Verschiebungen des Rands der Lamelle bei ihrer Erhitzung durch eine bewegbare Wärmequelle lassen sich zur Erläuterung des Mechanismus der Bildung der Querschrumpfung in der Zone der Schweißnaht verwenden.

Wenn zwei Lamellen mit einem Spalt geschweißt werden, wie in Fig. 9b gezeigt, werden die Ränder jeder der Lamellen einer Querverschiebung v unterworfen. Vor der Wärmequelle hemmt nichts die Verschiebung der Ränder aufeinander zu. Im Moment des Schweißens der Ränder erlangen die Verschiebungen ihre maximale Größe vmax, während die gegenseitige Annäherung der Ränder 2 vmax beträgt. Wenn das Metall nach dem Schweißen, wenn es eine hohe Temperatur hat, eine hohe Festigkeit annähme, würde die Verringerung v hinter der Wärmequelle sofort zu einem Ziehen der Lamellen aufeinander zu und zum Entstehen einer Querschrumpfung 2vmax führen. Tatsächlich erlangt das Metall in dem Abschnitt OA einen geringen Widerstand gegenüber der plastischen Verformung, was dazu führt, dass das Metall in diesem Abschnitt fließt und sich um die Größe 2(vmax-vA) verlängert.

In dem Punkt A hört die plastische Verlängerung des Metalls in der Richtung quer zur Schweißnaht auf; die gegenseitige Annäherung der Ränder beträgt 2vA. Im Folgenden entwickelt sich nach dem vollständigen Abkühlen des Metalls die Querschrumpfung Atransv = 2vA. Die Größe der plastischen Verformung, d.h. die Differenz 2(vmax-vA), hängt hauptsächlich von den mechanischen Eigenschaften des Metalls und von der Wärmeabgabe in die Luft ab. Je größer die Wärmeabgabe, desto schneller sinkt die in Fig. 9a gezeigte Kurve v hinter der Quelle. Dabei entspricht das Absinken von v nicht dem Absinken der Temperatur des Metalls. Daher erhöht sich bei einem graduellen Absinken von v, das der gestrichelten Kurve in Fig. 9a entspricht, die Größe 2vA, und die plastische Verformung sinkt.

Bei Lamellen, die ohne Spalt verbindungsgeschweißt werden, können die Ränder vor der Wärmequelle sich nicht ungehindert verschieben. Bis zu einem bestimmten Punkt B, der in Fig. 9a dargestellt ist, geschieht eine elastische Kompression des Metalls dadurch, dass die Ränder aufeinander lasten. Von dem Punkt B bis zu dem Punkt D geschieht eine plastische Verformung des Stauchens des Metalls. Dabei wirkt der Abschnitt CB, der einer elastischen Verformung unterworfen wird, aufgrund der elastischen Wechselwirkung der Abschnitte des Metalls BC und BD auf die Größe Vmax in dem Punkt D ein. Das führt dazu, dass beim Schweißen von Lamellen ohne Spalt sowie beim Durchschmelzen der gesamten durchgehenden Lamelle die Größe 2 vmax kleiner ist und folglich auch die Querschrumpfung, die gleich 2vA ist, kleiner ist. Die Querschrumpfung ist in diesem Fall um 15 bis 20 % kleiner als beim Schweißen mit Spalt. Bei einem idealen elastischen Verlauf des Verbindungs-Schweißvorgangs zweier Lamellen wird die maximal mögliche Größe 2 vmax durch die Formel ausgedrückt:

$$2v_{\max} = 2\,\frac{\alpha}{c\gamma}\cdot\frac{q}{\delta v_c}.$$

Die tatsächliche Größe der Querschrumpfung, die im Moment des Schweißens entsteht und nach der vollständigen Abkühlung der Lamelle bleibt, ist kleiner als theoretisch möglich.

Beim Lichtbogeneinlagennahtschweißen von Lamellen, wenn sie ohne Spalt verbunden werden, ist

$$\Delta_{\mathrm{non}} \leq (0{,}5\,\delta_O\,0{,}7)2v_{\max} = (1{,}0 \text{ bis } 1{,}4)\,\frac{\alpha}{c\lambda}\cdot\frac{q}{\delta v_c}$$

Die Formel gilt für kohlenstoffarme, Niedriglegierungs- und austenitische Stähle und auch für Titan- und Aluminiumlegierungen mit einer Dicke bis ungefähr 16 mm.

Die Querschrumpfung der verbindungsgeschweißten Lamellen wird nicht sofort nach dem Schweißen beobachtet, sondern erst nach dem vollständigen Abkühlen der Lamellen, obwohl die Annäherung der Ränder unmittelbar beim Schweißvorgang geschieht.

Während des Durchgangs der Wärmequelle ist eine relativ schmale Zone des Metalls an den Verschiebungen beteiligt, nämlich die auf eine hohe Temperatur erhitzte. Daher hat die Befestigung der Lamellen praktisch keinen Einfluss auf die Querverschiebung der Ränder während des Schweißens. Nur in der Phase der Abkühlung, wenn die Befestigungen ausreichend stark sind, ist eine plastische Verformung des Metalls möglich, die zu einer Verringerung der Querschrumpfung führt. An den Anfangsabschnitten der Naht wird keine quasistationäre Verschiebung der Ränder erreicht, die Querschrumpfung ist hier etwas geringer in der Höhe als am übrigen Teil der Naht.

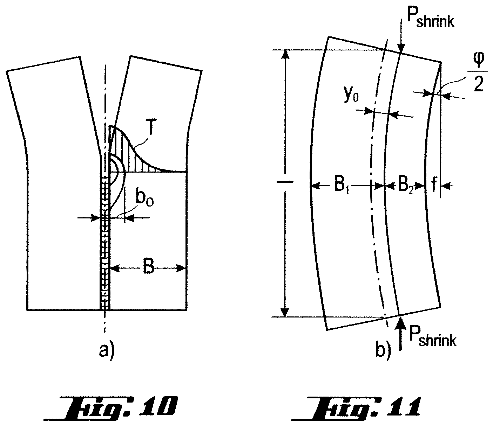

Bei wiederholtem Erhitzen an ein und derselben Stelle ist die Querschrumpfung durch die zweite Naht gleich der Schrumpfung durch die erste Naht, wenn dabei die Erhitzungsbedingungen nicht verändert wurden. Wenn die Lamellen mit einem Spalt geschweißt werden, kann es passieren, dass schon vor dem Zuführen der Wärmequelle aufgrund der temporären Verformungen die Ränder sich einander annähern oder sich voneinander entfernen können. In diesem Fall besteht die gesamte Querschrumpfung aus Verschiebungen, die durch die temporären Verformungen der Lamellen insgesamt entstehen, und aus Verschiebungen in der Schweißzone. Beim Schweißen von Lamellen, die ohne Spalt verbunden werden, oder solchen, die mit Klemmen verbunden werden, hängt die Querschrumpfung in der Regel nicht von den temporären Verformungen ab. Eine Ausnahme bilden Fälle, bei denen beispielsweise ohne Spalt verbundene, aber nicht aneinander befestigte Teile sich beim Schweißvorgang voneinander entfernen. Das Entfernen der Lamellen voneinander und die Öffnung eines Spalts beim Schweißen kann aufgrund von zwei Ursachen auftreten: so genannte temporäre strukturelle Verformungen und ein ungleichmäßiges Erhitzen schmaler Lamellen in der Breite. Verformungen schmaler Lamellen durch ungleichmäßiges Erhitzen in der Breite sind ihrem Wesen nach Biegeverformungen in Längsrichtung in einer Ebene, die schematisch in Fig. 10 dargestellt sind. Die Biegung der Lamellen geschieht infolgedessen, dass die erhitzte Seite der Lamelle sich ausdehnt, während die kalte Seite dieser Ausdehnung entgegenwirkt. In dem Maß, wie sich die Breite der Lamelle bei gleich bleibender Kraft der Wärmequelle verringert, wachsen die Verformungen, die durch die Drehung der Schnitte hervorgerufen werden. Jedoch können sehr schmale Lamellen vollständig bis auf hohe Temperaturen erhitzt werden und keine wesentlichen Winkelverformungen erleiden.

Die Breite der Lamellen, bei der die Verformungen durch die Drehung der Schnitte vernachlässigt werden können, hängt von der Schweißart und den thermophysikalischen Eigenschaften des Metalls ab. Für eine objektive Beurteilung der Breite der Lamellen muss die Beziehung $\dfrac{B}{b_0}$ verwendet werden, wobei B die Breite einer Lamelle ist und b0 die Breite der Zone ist, die auf eine Temperatur erhitzt wird, bei der die Fließgrenze des Metalls nahe Null ist.

Wenn die Theorie starker, sich schnell bewegender Wärmequellen verwendet wird, kann die Größe b0 gemäß der Formel gefunden werden:

$$b_0 = \frac{0{,}242}{c\gamma T_0} \cdot \frac{q}{v_c \delta}.$$

Bei einer Beziehung $\dfrac{B}{b_0} \gtrsim 8$ können die Lamellen als breit angesehen werden, und die Winkelverformungen durch das ungleichmäßige Erhitzen können als unbedeutend angesehen werden.

Die restlichen Verkürzungsverformungen in Längsrichtung beim Verbindungsschweißen von Lamellen werden, falls keine Biegeverformungen beim Schweißvorgang aufgetreten sind, nach der Formel bestimmt:

$$\Delta_{\text{long}} = \frac{P_{shrink} l}{EF}$$

wobei $P_{shrink} = 1{,}7\,\dfrac{q}{v_c}$ die Schrumpfkraft ist, und I und F die Länge und Schnittfläche der zu schweißenden Lamelle sind.

Beim Schweißen von zwei Lamellen von unterschiedlicher Breite erzeugt, wie in Fig. 9b gezeigt, die Schrumpfkraft $P_{shrink}$, die in einem Abstand y0 von der Mittelachse angeordnet ist, das Biegemoment M. Die zu schweißenden Lamellen verbiegen sich nach der Abkühlung auch neben der Längsverkürzung

$$\Delta_{\text{long}} = \frac{P_{shrink}}{E(B1 + B2)\delta}$$

Die oben angeführten Beziehungen und Abhängigkeiten ermöglichen es, die optimalen Abmessungen der Schmelzzone und die minimale Länge auszuwählen, mit der die Wärmeabfuhr aus der Schmelzzone erfolgen muss, und die optimalen Abmessungen der Länge zu bestimmen, auf der die Teile umfasst werden, um ein Ausbuchten beim Schweißen zu verhindern und die Restspannungen in der zu schweißenden Konstruktion zu verringern.

Gemäß der vorliegenden Erfindung wird die gestellte Aufgabe der Auswahl der optimalen Parameter des Schweißvorgangs dadurch gelöst, dass die zueinander zentrierten zu verbindenden Ummantelungen an ihrem Umfang in der Verbindungsebene vorläufig durch Punktschweißen mit vorher bestimmter Schrittbewegung der Elektrode in einem Abstand von 20 bis 50 $\delta$ zusammengeschweißt werden, während das eigentliche durchgehende Hauptschweißen unter Bildung einer Schmelzzone erfolgt, deren Breite 4 bis 6 $\delta$ beträgt.

Die Aufgabe wird auch dadurch gelöst, dass bei der Durchführung des Schweißverfahrens die Wärmeabfuhr in den zu schweißenden Teilen auf einem Abstand von der Verbindungsebene der dünnwandigen Ummantelungsteile beginnt, der nicht mehr als 5 bis 8 $\delta$ beträgt.

Das technische Ergebnis der Erfindung wird in den Grenzen der genannten Beziehungen erreicht, die experimentell bestimmt wurden.

Das erfindungsgemäße Verfahren wird wie folgt durchgeführt.

Zunächst wird an den Verformungsvorrichtungen an den Ummantelungsrohlingen eine Verformung der Mikrovorsprünge an der zu schweißenden Oberfläche der Stirnseiten mit ihrer Schrumpfung auf eine Größe von $\Delta$ h vorgenommen, und der Rauhigkeitsparameter der Stirnseiten Ra $\leq$ 0,16 $\mu$m wird erreicht. An diesen Verformungsvorrichtungen wird das zu verformende Metall an den Stirnseiten der Rohlinge zu der Seite der inneren Oberfläche verschoben, und an diesen werden innere ringförmige Bänder ausgebildet, deren Breite von 0,5 bis 1,5 $\delta$ und deren Dicke von 0,2 bis 0,5 $\delta$ beträgt.

Die Verbindungsummantelungen werden in der Vorrichtung angeordnet, die eine Zentrierung entsprechend dem Außendurchmesser vornimmt. Dabei sind bei der Konstruktion der Zentrierungsvorrichtung Kühlelemente zur Ableitung der Wärme von den zu schweißenden Teilen vorgesehen. Nach der Anordnung der Ummantelungsrohlinge in der Zentrierungsvorrichtung und Überprüfung der Koaxialität der Kongruenz ihrer Stirnseiten am Umfang wird in der Verbindungsebene die Punktschweißnaht mit einer schrittweisen Bewegung der Elektrode in Schritten von 20 bis 50 $\delta$ ausgeführt. Nach dem lokalen Schweißen der Ummantelungsrohlinge wird ein durchgehendes eigentliches Hauptschweißen unter Bildung einer Schmelzzone durchgeführt, deren Breite zwischen 4 und 6 $\delta$ liegt. Dabei beginnt die Durchführung der Wärmeabfuhr in den zu schweißenden Teilen in einer Richtung, die senkrecht zu der Naht ist, auf einer Länge, die nicht mehr als 6 bis 8 $\delta$ von der Symmetrieebene der Verbindung beträgt, die durch die Verbindungslinie hindurchgeht. Der Zyklus des Punktschweißens und des Hauptschweißens kann automatisch durchgeführt werden, d.h.

vom Schweißautomat programmiert.

Zur Ausführung der erfindungsgemäßen technischen Lösung wurden Modelle der Schweißummantelungen mit einer Dicke von 0,5 mm und einem Durchmesser von 147 und 213 mm aus nicht rostendem Stahl der Marke 08X18H10T hergestellt. Die Modelle der Schweißverbindungsrohre wurden durch Impulsbogenschweißen mit einer Nicht-Schmelz-Elektrode in einem Medium aus Argon, Stickstoff und Wasserstoff erzielt. Das Schweißen erfolgte mit einem TIG-Schweißkopf. Die erzielten Ergebnisse bestätigten die technische und wirtschaftliche Wirksamkeit der erfindungsgemäßen Lösung.

Die Verwendung der erfindungsgemäßen Vorrichtung bietet eine reale Möglichkeit, Schweißkonstruktionen von der Art geschlossener Behälter in Form von dünnwandigen geschlossenen Liner-Ummantelungen zu erzielen. Die Fertigung und Erprobung dieser dünnwandigen Liner-Ummantelungen, die unter Verwendung des erfindungsgemäßen Verfahrens hergestellt wurden, bestätigten ihre hohe Zuverlässigkeit und Wirksamkeit.

Gewerbliche Anwendbarkeit

Die Erfindung kann in der Luft- und Raumfahrttechnik und der Chemietechnik bei der Herstellung von Behältern aus korrosionsbeständigen Stählen, Aluminiumlegierungen und anderen Materialien verwendet werden. Außerdem kann die Erfindung bei der Herstellung von Druckbehältern und Rohren für das Bauwesen, zur Aufbewahrung und zum Transport von flüssigen und gasförmigen Medien verwendet werden.

**Patentansprüche**

1. Verfahren zur Verbindung von dünnwandigen Ummantelungen durch Schmelzschweißen, das Folgendes umfasst:

 - eine Vorbereitung der zu verbindenden Stirnseiten der Ummantelungen,
 - eine Stoß-Anordnung an zentrierenden Vorrichtungen und
 - ein gemeinsames Schmelzen der zu verbindenden Stirnseiten unter vorläufiger Beibehaltung eines Anordnungsspalts zwischen den aneinander anliegenden Oberflächen der Stirnseiten, der zum Durchführen des Schweißens ausreicht,

 **dadurch gekennzeichnet, dass**

 - an jeder der zu verbindenden Ummantelungen durch plastische Verformung eine Verformung der Mikrovorsprünge an der zu schweißenden Oberfläche der Stirnseite mit einem Stauchen des Materials durchgeführt wird,
 - das zu verformende Metall an der Stirnseite zu der Seite der inneren Oberfläche der Ummantelung bewegt wird und darauf ein inneres ringförmiges Wulstband ausgebildet wird,
 - die zu verbindenden Ummantelungen in einer bezüglich des Außendurchmessers zentrierenden Vorrichtung angeordnet werden, und zunächst am Umfang in der Ebene der Verbindung ihre Punktverschweißung durchgeführt wird,
 - anschließend ein durchgehendes Hauptschweißen durchgeführt wird, wobei eine Schmelzzone ausgebildet wird, deren Breite zwischen $4\,\delta$ und $6\,\delta$ beträgt, wobei $\delta$ die Dicke der Wand der zu schweißenden Ummantelung in mm ist,
 - wobei die Wärmeabfuhr in den zu schweißenden Teilen in einem Abstand beginnt, der $8\,\delta$ von der Verbindungssmittellinie nicht überschreitet.

2. Verfahren nach Anspruch 1, bei dem die Wärmeabfuhr in den zu schweißenden Teilen in einem Abstand beginnt, der $6\,\delta$ von der Verbindungsmittellinie nicht überschreitet.

3. Verfahren nach Anspruch 1 oder 2, bei dem die Verformung der Mikrovorsprünge an der zu schweißenden Oberfläche der Stirnseite mit einem Stauchen in der Größe $\Delta h = a\,\delta + b\,\delta^2/R$ mit Rollen mit einem Rauhigkeitsparameter $Ra \leq 0{,}16\,\mu m$ stattfindet, wobei $R$ der Radius der zu schweißenden Ummantelung in mm ist und die Koeffizienten $a$, $b$ konstante Koeffizienten mit Geltung für den Bereich $\delta/R$ von 0,003 bis 0,01 sind, wobei $a$ zwischen 0,1 und 0,3 und für $b$ zwischen 0,075 und 0,375 liegt.

4. Verfahren nach einem der vorigen Ansprüche, bei dem das innere ringförmige Wulstband mit einer Ringbreite von $0{,}5\,\delta$ bis $1{,}5\,\delta$ und einer Ringdicke von $0{,}2\,\delta$ und $0{,}5\,\delta$ ausgeführt wird.

5. Verfahren nach einem der vorigen Ansprüche, bei dem das Punktschweißen mit einer schrittweisen Bewegung der Elektrode um einen Schritt von 20 δ bis 50 δ erfolgt.

6. Verfahren nach einem der vorigen Ansprüche, bei dem die Verformung der Mikrovorsprünge an der Stirnseite und ihr Stauchen mit einer Begrenzung der radialen Verformungen der an der Stirnseite anliegenden äußeren Seitenoberfläche der dünnwandigen Ummantelung ausgeführt wird.

7. Verfahren nach einem der vorigen Ansprüche, bei dem die Verformung der Mikrovorsprünge an der Stirnseite und ihr Stauchen unter gleichzeitigem Glätten mit Rollen an einer an der Stirnseite von außen anliegenden seitlichen Oberfläche der dünnwandigen Ummantelung ausgeführt wird.

8. Verfahren nach einem der vorigen Ansprüche, bei dem die Verformung der Mikrovorsprünge an der zu schweißenden Oberfläche der Stirnseite mit Rollen mit einem Durchmesser zwischen 4 und 6 δ und mit einem Härteparameter des Materials HRc > 65 ausgeführt wird.

9. Verfahren nach Anspruch 8, bei dem die Verformung der Mikrovorsprünge an der zu schweißenden Oberfläche der Stirnseite mit einer auf die Rolle aufgebrachten Kontaktkraft von 200-300 N ausgeführt wird.

10. Verfahren nach einem der vorigen Ansprüche, bei dem das Punktschweißen in zwei Umdrehungen durchgeführt wird, wobei die zweite Umdrehung um einen halben Schritt von der Schweißung versetzt ist, die bei der ersten Umdrehung durchgeführt wurde.

11. Verfahren nach einem der vorigen Ansprüche, bei dem die dünnwandigen ringförmigen Bänder an den inneren Oberflächen der zu schweißenden Ummantelungen mit dem gleichen Innendurchmesser für jeden der zu schweißenden Ummantelungsrohlinge ausgebildet werden.

12. Verfahren nach einem der vorigen Ansprüche, bei dem die dünnwandigen ringförmigen Bänder an den inneren Oberflächen der zu schweißenden Ummantelungen in einem nicht rechten Winkel im Inneren jedes der zu schweißenden Ummantelungsrohlinge ausgebildet werden.

13. Verfahren nach einem der vorigen Ansprüche, bei dem an dem Erhitzungspunkt des Materials an der äußeren und der inneren Oberfläche der zu schweißenden Ummantelungen in ihrer Zusammensetzung unterschiedliche Schutzgasmedien zugeführt werden.

14. Verfahren nach einem der vorigen Ansprüche, bei dem nach der plastischen Verformung vor dem Schweißen die Stirnseitenoberflächen der Rohlinge mit Lösungsmittel gereinigt werden.

**Claims**

1. A model for fusion welding to join thin-walled sheathing, comprising:

    - a preparation for the end faces of the sheaths to be joined;
    - an abutting arrangement on a centering device; and
    - a common fusion of the end faces to be joined while an arranged gap is temporarily maintained between the surfaces of the end faces adjoining each other which is sufficient for welding to be carried out;

    **characterized in that**

    - on each of the sheathes to be joined by plastic deformation there are micro-protrusions formed from compression of the material on the surfaces of the end faces to be welded;
    - Metal on the end faces to be deformed is moved to the inside surface of the sheathing, forming thereon an inner annular flap;
    - The sheaths to be joined are arranged in a device which centers them by their outer diameters and for point welding to be initially carried out at the plane of the joint;
    - Subsequently, the main welding is carried out continually to form a fusion zone with a width between 4 δ and 6 δ, where δ is the thickness in millimeters of the wall of the sheathing to be welded;
    - Where heat removal in the parts to be welded starts at a distance not exceeding 8 δ from the centerline of the joint.

2. Method according to Claim 1 wherein the heat removal in the parts to be welded starts at a distance not exceeding 6 $\delta$ from the centerline of the joint.

3. Method according to Claim 1 or 2 wherein the micro-protrusions are formed on the surfaces of the end faces to be welded by a compression whose size is $\Delta h = a\delta + b\delta^2/R$ with rolls that have a roughness parameter of Ra $\leq$ 0.16 $\mu$m, where R is the radius in millimeters of the sheathing to be welded and the coefficients "a" and "b" are constant coefficients for the range $\delta/R$ of 0.003 to 0.01, with "a" lying between 0.1 and 0.3 and "b" lying between 0.075 and 0.375.

4. Method according to any preceding claim, wherein the inner annular flap has a ring width between 0.5 $\delta$ and 1.5 $\delta$ and a ring thickness of 0.2 $\delta$ and 0.5 $\delta$.

5. Method according to any preceding claim, wherein spot welding is performed with an electrode making a stepwise movement at a step between 20 $\delta$ and 50 $\delta$.

6. Method according to any preceding claim, wherein micro-protrusions are formed on the end face and they are compressed with a limit in radial deformations on the end face of the adjoining outer surface of the thin-walled sheathing.

7. Method according to any preceding claim, wherein micro-protrusions are formed on the end face and they are compressed with a limit in radial deformations on the end face of the outer adjoining surface of the thin-walled sheathing.

8. Method according to any preceding claim, wherein micro-protrusions are formed on the surface of the end face to be welded with rolls of a diameter between 4 and 6 $\delta$ and the hardening parameter of the material is HRc > 65.

9. Method according to Claim 8, wherein micro-protrusions are formed on the end face of the surface to be welded and the contact force to be applied on one of the rolls is 200-300 N.

10. Method according to any preceding claim, wherein spot welding is performed in two revolutions with the second revolution offset by half a step from the welding in the first revolution.

11. Method according to any preceding claim, wherein the thin-walled annular bands are formed on the inner surfaces of the sheathing to be welded so each of the blanks to be used in the sheathing to be welded have the same inside diameter.

12. Method according to any preceding claim, wherein the thin-walled annular bands are formed on the inner surfaces of the sheathing to be welded at a non-right angle inside each of the sheath blanks to be welded.

13. Method according to any preceding claim, wherein at the heating point shielding gas media of different compositions are supplied at the outer and inner surfaces of the sheathing to be welded.

14. Method according to any preceding claim, wherein subsequent to plastic deformation the end face surfaces of the blanks are cleaned with solvent prior to welding.

**Revendications**

1. Le modèle de soudage par fusion destiné à attacher le revêtement à paroi mince comprenant:

   - une préparation pour les faces d'extrémité des gaines à joindre;
   - un agencement en butée sur un dispositif de centrage; et
   - une fusion des faces d'extrémité à joindre alors qu'un espace suffisant pour le soudage à effectuer est agencé et temporairement maintenu entre les surfaces des faces d'extrémité à joindre;

   **caractérisé en ce que**

   - sur chacune des gaines à joindre par déformation plastique, il existe des micro-protubérances formées sur les surfaces des faces d'extrémité à souder à l'aide de la compression du matériau;

- le métal sur les faces d'extrémité à déformer est déplacé vers la surface intérieure de la gaine en formant un volet annulaire interne;

- les gaines à joindre sont disposées dans un dispositif qui les centre par leurs diamètres extérieurs pour un soudage par points à effectuer initialement dans le plan de jonction;

- par la suite, le soudage principal est effectué continuellement pour former une zone de fusion d'une largeur comprise entre 4 $\delta$ et 6 $\delta$, où $\delta$ est l'épaisseur, en millimètres, de la paroi de la gaine à souder;

- où le retrait de la chaleur des pièces à souder commence à une distance ne dépassant pas 8 $\delta$ de l'axe de la jonction.

2. Procédé selon la revendication 1, dans lequel l'élimination de la chaleur des pièces à souder débute à une distance ne dépassant pas 6 $\delta$ de l'axe central de la jonction.

3. Procédé selon la revendication 1 ou 2, dans lequel les micro-protubérances sont formées sur les surfaces des faces d'extrémité à souder à l'aide de la compression dont la grandeur est $\Delta h = a \delta + b \delta^2 / R$ avec les rouleaux dont le paramètre de rugosité Ra $\leq$ 0,16 $\mu$m, où R est le rayon, en millimètres, de la gaine à souder et les coefficients "a" et "b" sont des coefficients constants pour la gamme $\delta / R$ de 0,003 à 0,01, avec "a" compris entre 0,1 et 0,3 et "b" compris entre 0,075 et 0,375.

4. Procédé selon l'une quelconque des revendications précédentes, dans lequel le volet annulaire intérieur a une largeur annulaire comprise entre 0,5 $\delta$ et 1,5 $\delta$ et l'épaisseur de la bague est comprise entre 0,2 $\delta$ et 0,5 $\delta$.

5. Procédé selon l'une quelconque des revendications précédentes, dans lequel le soudage par points est effectué avec une électrode faisant un mouvement par étapes et une étape se situe entre 20 $\delta$ and 50 $\delta$.

6. Procédé selon l'une quelconque des revendications précédentes, dans lequel les micro-protubérances sont formées sur la face d'extrémité et sont comprimées avec une limite des déformations radiales sur la face d'extrémité de la surface extérieure adjacente de la gaine à paroi mince.

7. Procédé selon l'une quelconque des revendications précédentes, dans lequel les micro-protubérances sont formées sur la face d'extrémité et elles sont comprimées avec une limite dans des déformations radiales sur la face d'extrémité de la surface adjacente extérieure de la gaine à paroi mince.

8. Procédé selon l'une quelconque des revendications précédentes, dans lequel des micro-protubérances sont formées sur la surface de la face d'extrémité à souder avec des rouleaux d'un diamètre compris entre 4 et 6 $\delta$ et le paramètre de durcissement du matériau est HRc> 65.

9. Procédé selon la revendication 8, dans lequel des micro-protubérances sont formées sur la face d'extrémité de la surface à souder et la force de contact à appliquer sur l'un des rouleaux est 200-300 N.

10. Procédé selon l'une quelconque des revendications précédentes, dans lequel le soudage par points est réalisé en deux révolutions et la seconde révolution de soudage est décalée d'une demi-étape par rapport à la première révolution.

11. Procédé selon l'une quelconque des revendications précédentes, dans lequel les bandes annulaires à paroi mince sont formées sur les surfaces intérieures de la gaine à souder afin que chacun des espaces à utiliser dans la gaine à souder ait le même diamètre intérieur.

12. Procédé selon l'une quelconque des revendications précédentes, dans lequel les bandes annulaires à paroi mince sont formées sur les surfaces internes de la gaine à souder à l'angle non droit à l'intérieur de chacun des espaces de la gaine à souder.

13. Procédé selon l'une quelconque des revendications précédentes, dans lequel, sur les points de chauffage, des milieux de gaz de différentes compositions sont fournis aux surfaces extérieure et intérieure de la gaine à souder.

14. Procédé selon l'une quelconque des revendications précédentes, dans lequel, après la déformation plastique, les surfaces des faces d'extrémité des espaces sont nettoyées avec du solvant avant le soudage.

**Fig. 1**

**Fig. 2**

**Fig. 3**

$S_M$

$d$

$R_{np}$

$L$

$S_{Z/2}$

B

$\pi/4$

$h_B$

A

A'

C

K

h

D

D'

K'

$\pi/4$

## Fig. 4

$\delta$

$(1,5-2,5)\ \delta$

$(0,2-0,5)\ \delta$

## Fig. 5

**Fig. 6**

**Fig. 7**

*Fig. 8*

*Fig. 9*

a)

*Fig. 10*

b)

*Fig. 11*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005002618 A
- SU 1185781 A1
- RU 2288827 C1
- RU 95118844 A